# EUROPÄISCHE PATENTSCHRIFT

(11) **EP 2 420 820 B1**
(45) Veröffentlichungstag und Bekanntmachung des Hinweises auf die Patenterteilung: **13.06.2018**
(21) Anmeldenummer: 10004098.9
(22) Anmeldetag: 17.04.2010
(51) Int. Cl.: G01N 21/29

(54) **Verfahren und Vorrichtung zur Prüfung von bruchgetrennten Bauteilen**
Method and apparatus for testing split components
Procédé et dispositif de vérification de composants fragmentés

(30) Priorität: 12.05.2009 DE 102009020980
(43) Veröffentlichungstag der Anmeldung: 22.02.2012
(73) Patentinhaber: JENOPTIK Industrial Metrology Germany GmbH, 78056 Villingen-Schwenningen (DE)
(72) Erfinder: Keller, Hubert, 78464 Konstanz (DE)
(74) Vertreter: Wagner, Carsten

(56) Entgegenhaltungen:
- DE-A1- 10 161 817
- DE-B4- 10 351 640

## Beschreibung

Die Erfindung betrifft ein Verfahren der im Oberbegriff des Anspruchs 1 genannten Art zur Prüfung von bruchgetrennten Bauteilen.

Es sind Verfahren zur Prüfung von bruchgetrennten Bauteilen bekannt, bei denen mittels einer Prüfvorrichtung taktil festgestellt wird, ob an wenigstens einer Bruchstelle ein geometrischer Versatz zwischen den Bruchflächen besteht. Hierzu verwendete Prüfvorrichtungen können beispielsweise taktile Meßtaster aufweisen.

Durch DE 103 51 640 B4 ist ein Verfahren der betreffenden Art zur Prüfung von bruchgetrennten Bauteilen bekannt, bei dem festgestellt wird, ob an wenigstens einer Bruchstelle ein geometrischer Versatz zwischen den Bruchflächen besteht. Bei dem bekannten Verfahren wird die Verbindung der Bruchflächen auf ihre Fügequalität hin überprüft, wobei Adhäsionskräfte zwischen den ineinander greifenden, zerklüfteten Bruchflächen der getrennten Teile gemessen werden.

Ein Nachteil des bekannten Verfahrens besteht darin, daß es insbesondere für eine Anwendung in der Serienfertigung wenig geeignet ist.

Der Erfindung liegt die Aufgabe zugrunde, ein Verfahren der im Oberbegriff des Anspruchs 1 genannten Art zur Prüfung von bruchgetrennten Bauteilen anzugeben, das den Nachteil des bekannten Verfahrens nicht aufweist, das also zur Anwendung in einer Serienfertigung geeignet ist.

Diese Aufgabe wird durch die im Anspruch 1 angegebene Erfindung gelöst.

Der Grundgedanke der Erfindung besteht darin, auf optischem Wege einen Versatz zwischen beiderseits der Bruchstelle angeordneten Flächen in Richtung der Flächennormalen zu messen.

Auf diese Weise kann die Messung eines Versatzes zwischen den Flächen schnell und mit hoher Genauigkeit erfolgen. Ein weiterer Vorteil der Erfindung besteht darin, daß eine robuste und beispielsweise hinsichtlich der Prüfung von Pleueln mit unterschiedlichem Durchmesser des Pleuelauges flexible Prüfvorrichtung verwendet werden kann. Die verwendete Prüfvorrichtung kann insbesondere einen großen Meßbereich haben. Da mittels des erfindungsgemäßen Verfahrens insbesondere auch unmittelbar nacheinander beispielsweise Pleuel unterschiedlicher Größe geprüft werden können, ist das erfindungsgemäße Verfahren insbesondere für eine Anwendung in der Serienfertigung geeignet.

Unter einer optischen Messung eines geometrischen Versatzes der Flächen in Richtung der Flächennormalen wird erfindungsgemäß sowohl verstanden, daß festgestellt wird, ob ein Versatz besteht als auch, daß der Versatz nach Betrag und Richtung ermittelt wird.

Das erfindungsgemäße Verfahren ist zur Prüfung beliebiger geeigneter bruchgetrennter Bauteile geeignet, beispielsweise zur Prüfung von bruchgetrennten gegossenen Gehäuseteilen. Besonders gut ist das erfindungsgemäße Verfahren zur Prüfung bruchgetrennter Pleuel geeignet. Dementsprechend sieht eine vorteilhafte Weiterbildung der Erfindung vor, daß ein im Bereich seiner Pleuelbohrung bruchgetrennter Pleuel geprüft wird.

Eine vorteilhafte Weiterbildung der vorgenannten Ausführungsform sieht vor, daß an wenigstens einer Bruchstelle der geometrische Versatz von beiderseits der Bruchstelle angeordneten Flächen in Axialrichtung der Pleuelbohrung ermittelt wird. Bei dieser Ausführungsform wird ermittelt, ob Planflächen des Pleuels in Axialrichtung der Pleuelbohrung zueinander versetzt sind (Planflächenversatz).

Eine andere Weiterbildung der Erfindung sieht vor, daß an wenigstens einer Bruchstelle der geometrische Versatz von beiderseits der Bruchstelle angeordneten Flächen in Radialrichtung der Pleuelbohrung ermittelt wird. Bei dieser Ausführungsform wird ermittelt, ob die Pleuelbohrung begrenzende Flächen des Pleuels zueinander versetzt sind (Bohrungsversatz). Besonders vorteilhaft ist eine Kombination dieser Ausführungsform mit der zuvor genannten, da dann sowohl der Planflächenversatz als auch der Bohrungsversatz eines Pleuels ermittelt werden kann.

Erfindungsgemäß ist es grundsätzlich ausreichend, wenn der geometrische Versatz der beiderseits der Bruchstelle angeordneten Flächen an einer einzigen Bruchstelle ermittelt wird. Um die Genauigkeit der Prüfung zu erhöhen, sieht eine andere vorteilhafte Weiterbildung der Erfindung vor, daß ein geometrischer Versatz der beiderseits der Bruchstelle angeordneten Flächen an zwei zu der Pleuelbohrung diametral gegenüberliegenden Bruchstellen ermittelt wird.

Eine außerordentlich vorteilhafte Weiterbildung der Erfindung sieht vor, daß der Kantenverlauf einer durch die beiderseits der Bruchstelle angeordneten Fläche gebildeten Kante optisch detektiert wird. Auf diese Weise lassen sich sowohl das Vorhandensein eines Versatzes als auch Betrag und Richtung des Versatzes besonders schnell und mit hoher Genauigkeit ermitteln. Zudem arbeitet das erfindungsgemäße Verfahren auf optischem Wege und damit berührungslos.

Eine Weiterbildung der vorgenannten Ausführungsform sieht vor, daß zur Detektion des Kantenverlaufes die Kante fotografiert wird, wobei die Kante vorzugsweise digital fotografiert und der Kantenverlauf anhand des Digitalfotos ermittelt wird. Bei dieser Ausführungsform kann der Kantenverlauf anhand des Digitalfotos mittels Algorithmen der Bildverarbeitung schnell und mit großer Genauigkeit ermittelt werden.

Um die Kante zur Detektion des Kantenverlaufes zu fotografieren, sieht eine andere zweckmäßige Ausführungsform der Erfindung vor, daß jeder Bruchstelle wenigstens eine Kamera zugeordnet ist.

Eine besonders vorteilhafte Weiterbildung der vorgenannten Ausführungsform sieht vor, daß wenigstens einer Bruchstelle zwei Kameras zugeordnet sind, die die Bruchstelle aus zwei unterschiedlichen, vorzugsweise zueinander im wesentlichen senkrechten Richtungen fotografieren. Auf diese Weise ist es möglich, einen Versatz der beiderseits der Bruchstelle angeordneten Flächen insbesondere gleichzeitig in zwei unterschiedlichen Richtungen zu ermitteln.

In Bezug auf eine Prüfung eines Pleuels sieht eine vorteilhafte Weiterbildung der vorgenannten Ausführungsform vor, daß mit einer Kamera die Kante zur Ermittlung eines bezogen auf die Pleuelbohrung axialen Versatzes in Radialrichtung der Pleuelbohrung fotografiert wird und mit der anderen Kamera die Kante zur Ermittlung eines bezogen auf die Pleuelbohrung radialen Versatzes in Axialrichtung der Pleuelbohrung fotografiert wird. Auf diese Weise lassen sich insbesondere gleichzeitig der Planflächenversatz und der Bohrungsversatz eines Crack-Pleuels ermitteln.

Besonders vorteilhaft ist eine Ausführungsform, bei der jeder Bruchstelle wenigstens zwei Kameras zugeordnet sind.

Wird eine Bruchstelle mittels einer Digitalkamera fotografiert, so ist es zweckmäßig, daß eine Digitalkamera verwendet wird, bei der sämtliche Pixel gleichzeitig belichtet werden. Auf diese Weise ist sichergestellt, daß beispielsweise sämtliche Teile einer an der Bruchstelle gebildeten Kante gleichzeitig fotografiert werden, so daß sich der Meßkreis auf dem Bildsensor der Digitalkamera schließt. Auf diese Weise ergibt sich ein wesentlicher Vorteil gegenüber zeitseriell arbeitenden Verfahren, bei denen die Teile einer an der Bruchstelle gebildeten Kante in zeitlichem Abstand zueinander, beispielsweise mittels eines taktil arbeitenden Meßtasters, abgetastet werden.

Entsprechend den jeweiligen Anforderungen kann zur Beleuchtung der Bruchstelle bzw. der Bruchstellen eine beliebige geeignete Lichtquelle verwendet werden. Eine vorteilhafte Weiterbildung der Erfindung sieht insoweit vor, daß die Bruchstelle oder wenigstens eine der Bruchstellen mittels einer Lichtquelle diffus beleuchtet wird. Derartige diffuse Lichtquellen haben sich als besonders gut geeignet erwiesen. Grundsätzlich kann zur Beleuchtung jeder Bruchstelle bzw. zu detektierenden Kante eine separate Lichtquelle verwendet werden. Zweckmäßigerweise wird jedoch zur Beleuchtung sämtlicher Bruchstellen bzw. Kanten eine gemeinsame Lichtquelle verwendet, so daß der Aufbau einer zur Durchführung des Verfahrens verwendeten Prüfvorrichtung relativ einfach und damit kostengünstig ist.

Eine erfindungsgemäße Prüfvorrichtung zur Prüfung von bruchgetrennten Bauteilen ist im Anspruch 14 angegeben. Die erfindungsgemäße Prüfvorrichtung weist optische Meßmittel zur Vermessung wenigstens einer Bruchstelle in Bezug auf beiderseits der Bruchstelle angeordnete Flächen hinsichtlich eines geometrischen Versatzes der Flächen in Richtung der Flächennormalen auf. Die erfindungsgemäße Vorrichtung ist relativ einfach im Aufbau und ermöglicht eine schnelle, berührungslose Vermessung einer Bruchstelle mit hoher Genauigkeit.

Vorteilhafte und zweckmäßige Weiterbildungen der erfindungsgemäßen Prüfvorrichtung sind in den Ansprüchen 15 bis 26 angegeben.

Die Erfindung wird nachfolgend anhand der beigefügten Zeichnung näher erläutert, in der stark schematisiert ein Ausführungsbeispiel einer erfindungsgemäßen Prüfvorrichtung zur Durchführung eines Ausführungsbeispieles des erfindungsgemäßen Verfahrens dargestellt ist. Dabei bilden alle beschriebenen, in der Zeichnung dargestellten und in den Patentansprüchen beanspruchten Merkmale für sich genommen sowie in beliebiger Kombination miteinander den Gegenstand der Erfindung, unabhängig von ihrer Zusammenfassung in den Patentansprüchen und deren Rückbeziehung sowie unabhängig von ihrer Beschreibung bzw. Darstellung in der Zeichnung.

Es zeigt:
- Fig. 1: stark schematisiert eine Ansicht eines Pleuels,
- Fig. 2: stark schematisiert in einer Seitenansicht von links in Fig. 1 eine Einzelheit bei einem Pleuel, bei dem beiderseits der Bruchstelle angeordnete Flächen in Axialrichtung der Pleuelbohrung einen Versatz zueinander aufweisen,
- Fig. 3: stark schematisiert eine Einzelheit aus Fig. 2 bei einem Pleuel, bei dem beiderseits einer Bruchstelle angeordnete Flächen in Radialrichtung der Pleuelbohrung einen Versatz zueinander aufweisen und
- Fig. 4: in stark schematisierter Seitenansicht ein Ausführungsbeispiel einer erfindungsgemäßen Prüfvorrichtung,
- Fig. 5: die Prüfvorrichtung gemäß Fig. 4 in Prüfposition bei der Prüfung eines Pleuels.

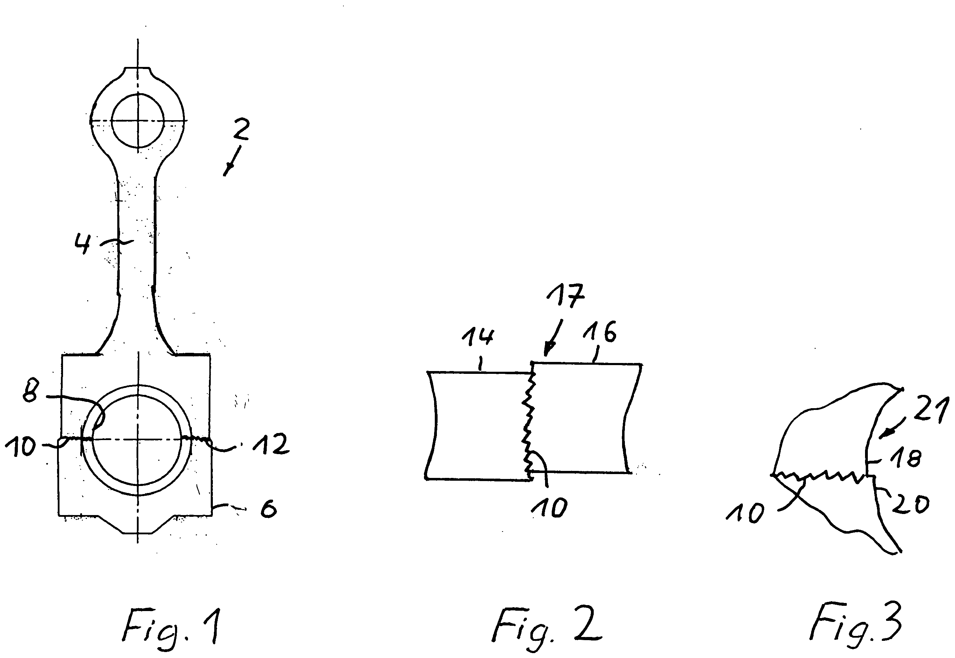

In Fig. 1 ist schematisiert ein bruchgetrenntes Bauteil in Form eines Pleuels 2 dargestellt, bei dem es sich um einen sogenannten Crack-Pleuel handelt, der einen Grundkörper 4 aufweist, von dem ein Deckel 6 mittels eines Gewaltbruches abgetrennt ist. Wie aus Fig. 1 ersichtlich ist, ist der Deckel 6 an zwei zu einer Pleuelbohrung 8 diametral gegenüberliegenden Bruchstellen 10, 12 von dem Grundkörper 4 abgetrennt.

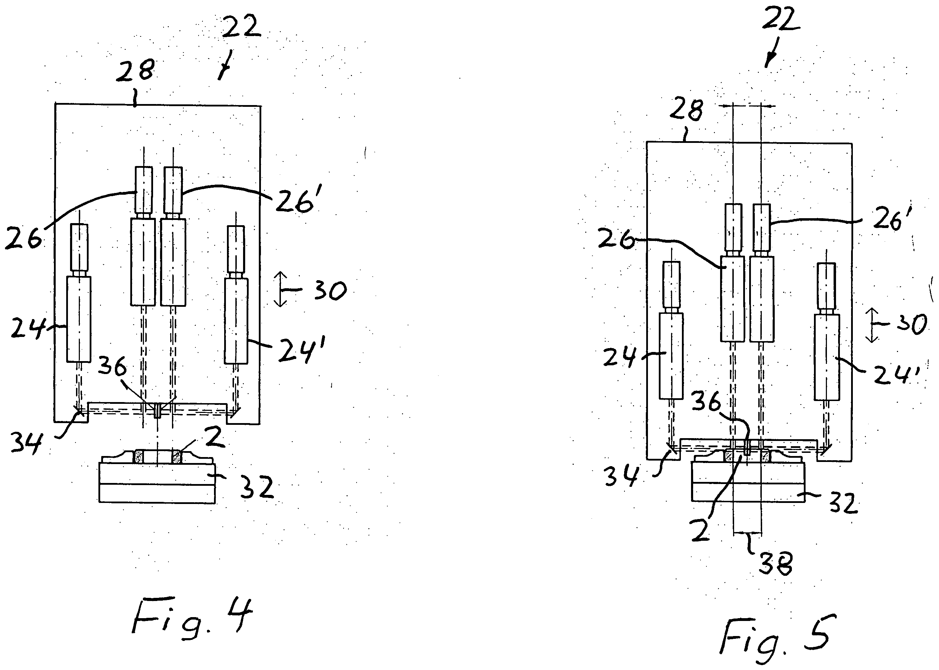

Fig. 1 zeigt den Pleuel 2 nach einem erneuten Zusammenfügen des Grundkörpers 4 und des Deckels 6. Beim erneuten Zusammensetzen des Grundkörpers 4 und des Dekkels 6 kann ein geometrischer Versatz zwischen den Bruchstellen sowohl in Axialrichtung als auch in Radialrichtung der Pleuelbohrung 8 auftreten. Da ein solcher Versatz unerwünscht und insbesondere im Hinblick auf die Festigkeit des Pleuels 2 nachteilig ist, wird mittels eines weiter unten anhand der Figuren 4 und 5 näher erläuterten Ausführungsbeispieles eines erfindungsgemäßen Verfahrens zur Prüfung von bruchgetrennten Bauteilen unter Verwendung eines Ausführungsbeispiels einer erfindungsgemäßen Prüfvorrichtung geprüft, ob ein geometrischer Versatz zwischen den Bruchflächen besteht. Hierbei wird erfindungsgemäß an wenigstens einer Bruchstelle in Bezug auf beiderseits der Bruchstelle angeordnete Flächen ein geometrischer Versatz der Flächen in Richtung der Flächennormalen optisch gemessen.

Fig. 2 zeigt eine Seitenansicht des Pleuels 2 von Fig. 1 in von links im Bereich der Bruchstelle 10. Bei diesem Ausführungsbeispiel besteht an der Bruchstelle 10 zwischen beiderseits der Bruchstelle angeordneten Flächen 14, 16 in Richtung der Flächennormalen, in Bezug auf Fig. 2 also in Axialrichtung der Pleuelbohrung 8, ein Versatz.

Die Flächen 14, 16 bilden eine Kante 17, deren in Fig. 2 dargestellter Kantenverlauf an der Stelle, an denen die Flächen 14, 16 in Axialrichtung der Pleuelbohrung 8 zueinander versetzt sind, eine Unstetigkeitsstelle aufweist.

Fig. 3 zeigt eine Ansicht in Fig. 1 im Bereich der Bruchstelle 10 und der Pleuelbohrung 8. Bei diesem Ausführungsbeispiel besteht an der Bruchstelle 10 neben dem aus Fig. 2 ersichtlichen Versatz in Axialrichtung der Pleuelbohrung 8 zusätzlich in Bezug auf beiderseits der Bruchstelle liegende Flächen 18, 20 in Richtung der Flächennormalen an der Bruchstelle 10, also in Radialrichtung der Pleuelbohrung 8, ein Versatz. Die Flächen 18, 20 bilden eine Kante 21, deren Kantenverlauf an der Stelle, an der die Flächen 18, 20 in Radialrichtung der Pleuelbohrung 8 zueinander versetzt sind, eine Unstetigkeitsstelle aufweist.

Eine durch die Bruchtrennung des Deckels 6 von dem Grundkörper 4 entstandene Zerklüftung der Bruchflächen ist in den Fig. 2 und 3 aus Gründen der Veranschaulichung stark überhöht dargestellt.

In Fig. 4 ist ein Ausführungsbeispiel einer erfindungsgemäßen Prüfvorrichtung 22 dargestellt, die zur Prüfung des bruchgetrennten Pleuels 2 dient. Die Prüfvorrichtung weist Prüfmittel auf, die feststellen, ob an wenigstens einer Bruchstelle 10, 12 ein geometrischer Versatz zwischen den Bruchflächen besteht. Erfindungsgemäß weisen die Prüfmittel optische Meßmittel zur Vermessung wenigstens einer Bruchstelle 10, 12 in Bezug auf beiderseits der Bruchstelle 10, 12 angeordnete Flächen 14, 16 bzw. 18, 20 hinsichtlich eines geometrischen Versatzes der Flächen 14, 16 bzw. 18, 20 in Richtung der Flächennormalen auf.

Bei dem dargestellten Ausführungsbeispiel sind die Meßmittel zur Detektion des Kantenverlaufes der durch die beiderseits der Bruchstelle 10, 12 angeordneten Flächen 14, 16 bzw. 18, 20 gebildeten Kante 17 bzw. 21 ausgebildet, wobei zur Detektion des Kantenverlaufes Digitalkameras 24, 26, 24', 26' vorgesehen sind, die nachfolgend kurz als Kameras bezeichnet werden. Die Kameras 24, 26 sind der Bruchstelle 10 und die Kameras 24', 26' der Bruchstelle 12 zugeordnet. Die Funktionsweise der Kameras 24', 26' entspricht derjenigen der Kameras 24, 26 und wird daher nachfolgend nicht näher erläutert.

Die Kameras 24, 26, 24', 26' sind an einem Grundkörper 28 angeordnet, der in Richtung eines Doppelpfeiles 30 relativ zu einer Halterung 32 für den Pleuel 2 höhenverstellbar ist.

Zur Ermittlung eines Versatzes zwischen den Flächen 18, 20 in Radialrichtung der Pleuelbohrung 8 (vgl. Fig. 3) fotografiert die Kamera 26 den Pleuel 2 im Bereich der Bruchstelle 10 in Axialrichtung der Pleuelbohrung 8.

Zur Ermittlung eines Versatzes der Flächen 14, 16 in Axialrichtung der Pleuelbohrung 8 (vgl. Fig. 2) fotografiert die Kamera 24 die Bruchstelle 10 in Radialrichtung der Pleuelbohrung 8.

Wie aus Fig. 4 ersichtlich ist, ist im Strahlengang der Kamera 24 ein Umlenkspiegel 34 angeordnet, der den Strahlengang der Digitalkamera 24 um 90° umlenkt. Im Ergebnis verlaufen die Strahlengänge der Kameras 24, 26 am Abbildungsort zueinander unter einem Winkel von etwa 90°, so daß die Kameras 24, 26 die Bruchstelle 10 aus zwei, bei dem Ausführungsbeispiel zueinander im wesentlichen senkrechten Richtungen fotografieren.

Die Prüfvorrichtung 22 weist ferner eine Lichtquelle 36 auf, die bei diesem Ausführungsbeispiel durch eine LED-Lichtquelle gebildet ist und den Abbildungsort diffus beleuchtet. Wie aus Fig. 4 ersichtlich ist, ist die Lichtquelle 36 im Strahlengang der Kameras 24, 24' und zwischen den Strahlengängen der Kameras 26, 26' angeordnet. Im Ergebnis erfolgt die Abbildung der Bruchstelle 10 in Axialrichtung der Pleuelbohrung 8 mittels der Kamera 26 in Hellfeldanordnung, während die Abbildung der Bruchstelle 10 in Axialrichtung der Pleuelbohrung 8 mittels der Kamera 24 in Durchlichtanordnung erfolgt. In Bezug auf die Abbildung der Bruchstelle 10 in Axialrichtung der Pleuelbohrung 8 mittels der Kamera 26 ist es vorteilhaft, wenn der axiale Rand der Pleuelbohrung 8 mit einer Fase versehen ist. Auf diese Weise ist die Beleuchtung des Abbildungsortes in Bezug auf die Abbildung mittels der Kamera 26 verbessert. Eine entsprechende Fase wird im Zusammenhang mit der Bruchtrennung von Pleueln ohnehin häufig angebracht. Das insoweit verwendete erfindungsgemäße Funktionsprinzip ist jedoch bei Pleueln 2 verwendbar, die eine entsprechende Fase nicht aufweisen.

Die Kameras 24, 26, 24', 26' sind mit einer nachgeordneten Auswertungseinrichtung verbunden, in denen mittels der Kameras 24, 26, 24', 26' aufgenommene Bilder abspeicherbar sind. Anhand der abgespeicherten Bilder wird der Kantenverlauf einer durch die beiderseits der Bruchstelle 10 angeordneten Flächen gebildeten Kante detektiert. Dies gilt sowohl für den Kantenverlauf der Kante 17 an den Flächen 14, 16 (vgl. Fig. 2) als auch für den Kantenverlauf der Kante 21 an den Flächen 18, 20.

Die Kameras 24, 26, 24', 26' sind so ausgebildet, daß beim Aufnehmen der Bruchstellen 10, 12 sämtliche Pixel des jeweiligen Bildsensors gleichzeitig belichtet werden. Auf diese Weise ist verhindert, daß Schwingungen des Pleuels 2 bzw. der Halterung 32 relativ zu der Prüfvorrichtung 22 zu einer Beeinträchtigung der Meßergebnisse führen. Damit ergibt sich gegenüber zeitseriell arbeitenden Verfahren in Bezug auf die Genauigkeit der Meßergebnisse ein erheblicher Vorteil.

Die Funktionsweise der Prüfvorrichtung 22 bei der Durchführung eines erfindungsgemäßen Verfahrens ist wie folgt:
Wie in Fig. 5 dargestellt, wird der Grundkörper 28 der Prüfvorrichtung 22 relativ zu der Halterung 32 mit dem Pleuel 2 derart abgesenkt, daß sich die durch die Flächen 14, 16 (vgl. Fig. 2) gebildete Kante 17 im Strahlengang der Kamera 24 und die durch die Flächen 18, 20 gebildete Kante 21 im Strahlengang der Kamera 26 befindet, wobei die Bruchstelle 10 mittels der Lichtquelle 36 beleuchtet wird.

Zur Prüfung des Pleuels 2 wird die Bruchstelle 10 mittels der Kameras 24, 26 fotografiert, wobei das mittels der Kamera 24 aufgenommene Digitalbild der durch Flächen 14, 16 gebildeten Kante 17 (vgl. Fig. 2) und das Digitalbild der durch die Flächen 18, 20 gebildeten Kante 19 (vgl. Fig. 3) in einem Speicher der Auswertungseinrichtung abgespeichert werden. Entsprechende Digitalbilder werden mittels der Kameras 24', 26' auch von der Bruchstelle 12 aufgenommen.

Mittels Algorithmen der Bildverarbeitung und Mustererkennung wird anhand der aufgenommenen Digitalbilder in der Auswertungseinrichtung der Kantenverlauf jeweils im Bereich der Bruchstelle 10 bzw. 12 detektiert. Anhand des detektierten Kantenverlaufes kann dann festgestellt werden, ob an den Bruchstellen 10 bzw. 12 jeweils ein Versatz in Radialrichtung bzw. Axialrichtung der Pleuelbohrung 8 vorliegt. Darüber hinaus kann der Versatz auch nach Betrag und Richtung ermittelt werden. Da ein etwaiger Versatz an beiden Bruchstellen 10, 12 ermittelt wird, sind mit der erfindungsgemäßen Prüfvorrichtung 22 auch solche Fälle erfaßbar, in denen an einer Bruchstelle ein Versatz vorliegt, aufgrund einer Verspannung des Pleuels 2 jedoch an der anderen Bruchstelle kein Versatz vorliegt.

Erfindungsgemäß werden die Digitalkameras 24, 24', 26, 26' verwendet, bei denen sämtliche Pixel gleichzeitig belichtet werden. Auf diese Weise ist eine Verfälschung der Meßergebnisse, die von einer zeitseriellen Belichtung von Pixeln herrühren könnten, zuverlässig vermieden. Erfindungsgemäß ist es ausreichend, wenn die Digitalkameras 24, 24', 26, 26' Standbildkameras sind. Es ist erfindungsgemäß jedoch auch möglich, Bewegtbildkameras zu verwenden.

Mittels der erfindungsgemäßen Prüfvorrichtung 22 sind die Bruchstellen eines Pleuels schnell und mit großer Genauigkeit prüfbar, wobei insbesondere die Meßmittelfähigkeit gegeben ist. Aufgrund der erfindungsgemäß glücklich gewählten Anordnung der Lichtquelle 36 ist eine Verschmutzung der Lichtquelle zuverlässig vermieden.

Da sich bei dieser Ausführungsform des erfindungsgemäßen Verfahrens der Meßkreis, wie oben erläutert, auf dem Bildsensor schließt, ergibt sich eine besonders niedrige Meßwertstreuung und damit insgesamt eine besonders hohe Genauigkeit.

Erfindungsgemäß ist es möglich, jede Bruchstelle bzw. Kante einer Bruchstelle mittels einer separaten Lichtquelle zu beleuchten. Vorteilhafterweise werden jedoch sämtliche Bruchstellen bzw. Kanten mittels einer gemeinsamen Lichtquelle beleuchtet, wie dies bei dem Ausführungsbeispiel gemäß den Figuren 4 und 5 der Fall ist.

Dadurch, daß Digitalkameras mit flächigem Bildsensor verwendet werden, können Pleuel mit innerhalb gewisser Grenzen unterschiedlichen Durchmessern der Pleuelbohrung geprüft werden. Falls darüber hinaus eine Anpassung der Prüfvorrichtung 22 an Pleuel mit unterschiedlichen Durchmessern erforderlich ist, so kann der Abstand der optischen Achsen der Kameras 26, 26' zueinander entsprechend eingestellt werden. Hierzu können die Kameras 26, 26' senkrecht zur ihren optischen Achsen 28 verstellbar angeordnet sein.

## Patentansprüche

1. Verfahren zur Prüfung von bruchgetrennten Bauteilen,
bei dem festgestellt wird, ob an wenigstens einer Bruchstelle ein geometrischer Versatz zwischen den Bruchflächen besteht,
**dadurch gekennzeichnet,**
**daß** an wenigstens einer Bruchstelle in Bezug auf beiderseits der Bruchstelle angeordnete Flächen ein geometrischer Versatz der orthogonal zum Bruchspalt angeordneten Flächen in Richtung der Flächennormalen optisch gemessen wird.

2. Verfahren nach Anspruch 1, **dadurch gekennzeichnet, daß** ein im Bereich seiner Pleuelbohrung bruchgetrennter Pleuel geprüft wird.

3. Verfahren nach Anspruch 2, **dadurch gekennzeichnet, daß** an wenigstens einer Bruchstelle der geometrische Versatz von beiderseits der Bruchstelle angeordneten Flächen in Axialrichtung der Pleuelbohrung ermittelt wird.

4. Verfahren nach Anspruch 2 oder 3, **dadurch gekennzeichnet, daß** an wenigstens einer Bruchstelle der geometrische Versatz von beiderseits der Bruchstelle angeordneten Flächen in Radialrichtung der Pleuelbohrung ermittelt wird.

5. Verfahren nach einem der Ansprüche 2 bis 4, **dadurch gekennzeichnet, daß** ein geometrischer Versatz der beiderseits der Bruchstelle angeordneten Flächen an zwei zu der Pleuelbohrung diametral gegenüberliegenden Bruchstellen ermittelt wird.

6. Verfahren nach einem der vorhergehenden Ansprüche, **dadurch gekennzeichnet, daß** der Kantenverlauf einer durch die beiderseits der Bruchstelle angeordneten Flächen gebildeten Kante optisch detektiert wird.

7. Verfahren nach Anspruch 6, **dadurch gekennzeichnet, daß** zur Detektion des Kantenverlaufes die Kante fotografiert wird.

8. Verfahren nach Anspruch 7, **dadurch gekennzeichnet, daß** die Kante digital fotografiert und der Kantenverlauf anhand des Digitalfotos ermittelt wird.

9. Verfahren nach einem der vorhergehenden Ansprüche, **dadurch gekennzeichnet, daß** jeder Bruchstelle wenigstens eine Kamera zugeordnet ist.

10. Verfahren nach einem der Ansprüche 7 bis 9, **dadurch gekennzeichnet, daß** wenigstens einer Bruchstelle zwei Kameras zugeordnet sind, die die Bruchstelle aus zwei unterschiedlichen, vorzugsweise zueinander im wesentlichen senkrechten Richtungen fotografieren.

11. Verfahren nach Anspruch 10, **dadurch gekennzeichnet, daß** die Kante zur Ermittlung eines bezogen auf die Pleuelbohrung axialen Versatzes mit einer Kamera in Radialrichtung der Pleuelbohrung fotografiert wird und die Kante zur Ermittlung eines bezogen auf die Pleuelbohrung radialen Versatzes mit der anderen Kamera in Axialrichtung der Pleuelbohrung fotografiert wird.

12. Verfahren nach einem der Ansprüche 8 bis 11, **dadurch gekennzeichnet, daß** eine Digitalkamera verwendet wird, bei der sämtliche Pixel gleichzeitig belichtet werden.

13. Verfahren nach einem der vorhergehenden Ansprüche, **dadurch gekennzeichnet, daß** die Bruchstelle oder wenigstens eine der Bruchstellen mittels einer Lichtquelle beleuchtet wird.

14. Prüfvorrichtung zur Prüfung von bruchgetrennten Bauteilen,
mit Prüfmitteln, die feststellen, ob an wenigstens einer Bruchstelle ein geometrischer Versatz zwischen den Bruchflächen besteht,
**dadurch gekennzeichnet,**
**daß** die Prüfmittel optische Meßmittel zur Vermessung wenigstens einer Bruchstelle (10) in Bezug auf beiderseits der Bruchstelle angeordnete Flächen (14, 16 bzw. 18, 20) hinsichtlich eines geometrischen Versatzes der orthogonal zum Bruchspalt angeordneten Flächen (14, 16 bzw. 18, 20) in Richtung der Flächennormalen aufweisen.

15. Prüfvorrichtung nach Anspruch 14, **dadurch gekennzeichnet, daß** das bruchgetrennte Bauteil ein im Bereich seiner Pleuelbohrung (8) bruchgetrennter Pleuel (2) ist.

16. Prüfvorrichtung nach Anspruch 15, **dadurch gekennzeichnet, daß** die Meßmittel an wenigstens einer Bruchstelle (10) den geometrischen Versatz von beiderseits der Bruchstelle (10) angeordneten Flächen (14, 16) in Axialrichtung der Pleuelbohrung (8) ermitteln.

17. Prüfvorrichtung nach Anspruch 15 oder 16, **dadurch gekennzeichnet, daß** die Meßmittel an wenigstens einer Bruchstelle (10) den geometrischen Versatz von beiderseits der Bruchstelle angeordneten Flächen (18, 20) in Radialrichtung der Pleuelbohrung (8) ermitteln.

18. Prüfvorrichtung nach einem der Ansprüche 15 bis 17, **dadurch gekennzeichnet, daß** die Meßmittel einen geometrischen Versatz der beiderseits der Bruchstelle angeordneten Flächen (14, 16 bzw. 18, 20) an zwei zu der Pleuelbohrung (8) diametral gegenüberliegenden Bruchstellen (10, 12) ermitteln.

19. Prüfvorrichtung nach einem der Ansprüche 14 bis 18, **dadurch gekennzeichnet, daß** die Meßmittel zur Detektion des Kantenverlaufes einer durch die beiderseits der Bruchstelle (10) angeordneten Flächen (14, 16 bzw. 18, 20) gebildeten Kante ausgebildet sind.

20. Prüfvorrichtung nach Anspruch 19, **gekennzeichnet durch** wenigstens eine Kamera zur Detektion des Kantenverlaufes der Kante.

21. Prüfvorrichtung nach Anspruch 20, **dadurch gekennzeichnet, daß** die Kamera eine Digitalkamera (24, 24, 26, 26') ist.

22. Prüfvorrichtung nach Anspruch 20 oder 21, **dadurch gekennzeichnet, daß** jeder Bruchstelle (10, 12) wenigstens eine Kamera (24, 26; 24', 26') zugeordnet ist.

23. Prüfvorrichtung nach Anspruch 22, **dadurch gekennzeichnet, daß** wenigstens einer der Bruchstellen (10, 12) zwei Kameras (24, 26; 24', 26') zugeordnet sind, die relativ zu der Bruchstelle (10, 12) derart ausgerichtet sind, daß sie die Bruchstelle (10, 12) aus zwei unterschiedlichen, vorzugsweise zueinander im wesentlichen senkrechten Richtungen fotografieren.

24. Prüfvorrichtung nach Anspruch 23, **dadurch gekennzeichnet, daß** eine Kamera (24, 24') die Kante zur Ermittlung eines bezogen auf die Pleuelbohrung (8) axialen Versatzes in Radialrichtung der Pleuelbohrung (8) fotografiert und die andere Kamera (26) die Kante zur Ermittlung eines bezogen auf die Pleuelbohrung (8) radialen Versatzes in Axialrichtung der Pleuelbohrung (8) fotografiert.

25. Prüfvorrichtung nach einem der Ansprüche 21 bis 24, **dadurch gekennzeichnet, daß** die Kamera eine Digitalkamera ist, bei der sämtliche Pixel gleichzeitig belichtet werden.

26. Prüfvorrichtung nach einem der vorhergehenden Ansprüche, **gekennzeichnet durch** eine Lichtquelle zur Beleuchtung der Bruchstelle (10, 12) oder wenigstens einer der Bruchstellen (10, 12).

## Claims

1. Method for testing fractured components,
in which it is established whether at least at one fracture point there is geometric offset between the fractured surfaces,
**characterised in that**
at least at one fracture point in relation to the surfaces on both sides of the fracture point a geometric offset of the surfaces orthogonal to the fracture is measured optically in the direction of the surface normals.

2. Method according to claim 1, **characterised in that** a connecting rod that is fractured in the area of its connecting rod bore is tested.

3. Method according to claim 2, **characterised in that** at least at one fracture point the geometric offset of surfaces on both sides of the fracture point is determined in the axial direction of the connecting rod bore.

4. Method according to claim 2 or 3, **characterised in that** at least at one fracture point the geometric offset of surfaces on both sides of the fracture point is determined in the radial direction of the connecting rod bore.

5. Method according to any of claims 2 to 4, **characterised in that** a geometric offset of the surfaces on both sides of the fracture point is determined at two fractures points diametrically opposite the connecting rod bore.

6. Method according to any of the preceding claims, **characterised in that** the line of an edge formed by the surfaces on both sides of the fracture point is determined optically.

7. Method according to claim 6, **characterised in that** the edge is photographed to determine the line of the edge.

8. Method according to claim 7, **characterised in that** the edge is digitally photographed and the line of the edge is determined by means of the digital photo.

9. Method according to any of the preceding claims, **characterised in that** at least one camera is assigned to each fracture point.

10. Method according to any of claims 7 to 9, **characterised in that** two cameras are assigned to at least one fracture point, which cameras photograph the fracture point from two different directions, that are preferably substantially perpendicular to one another.

11. Method according to claim 10, **characterised in that** the edge for determining an offset axial to the connecting rod bore is photographed by a camera in the radial direction of the connecting rod bore and the edge for determining an offset radial to the connecting rod bore is photographed by the other camera in the axial direction of the connecting rod bore.

12. Method according to any of claims 8 to 11, **characterised in that** a digital camera is used in which all of the pixels are illuminated at the same time.

13. Method according to any of the preceding claims, **characterised in that** the fracture point or at least one of the fracture points is illuminated by means of a light source.

14. Testing device for testing fractured components,
comprising testing means which establish whether at least at one fracture point there is a geometric offset between the fractured surfaces,
**characterised in that**
the testing means comprise optical measuring means for measuring at least one fracture point (10) with regard to surfaces (14, 16 and/or 18, 20) on both sides of the fracture point with respect to the geometric offset of the surfaces (14, 16 or 18, 20) in the direction of the surface normals.

15. Testing device according to claim 14, **characterised in that** the fractured component is a connecting rod (2) that is fractured in the area of its connecting rod bore (8).

16. Testing device according to claim 15, **characterised in that** at least at one fracture point (10) the measuring means determine the geometric offset of surfaces (14, 16) on both sides of the fracture point (10) in the axial direction of the connecting rod bore (8).

17. Testing device according to claim 15 or 16, **characterised in that** at least at one fracture point (10) the measuring means determine the geometric offset of surfaces (18, 20) on both sides of the fracture point in the radial direction of the connecting rod bore (8).

18. Testing device according to any of claims 15 to 17, **characterised in that** the measuring means determine a geometric offset of the surfaces (14, 16 or 18, 20) arranged on both sides of the fracture point at two fracture points (10, 12) diametrically opposite the connecting rod bore (8).

19. Testing device according to any of claims 14 to 18, **characterised in that** the measuring means are designed to determine the line of an edge formed by the surfaces (14, 16 or 18, 20) on both sides of the fracture point (10).

20. Testing device according to claim 19, **characterised by** at least one camera for determining the line of the edge.

21. Testing device according to claim 20, **characterised in that** the camera is a digital camera (24, 24', 26, 26').

22. Testing device according to claim 20 or 21, **characterised in that** at least one camera (24, 26; 24', 26') is assigned to each fracture point (10, 12).

23. Testing device according to claim 22, **characterised in that** two cameras (24, 26; 24', 26') are assigned to at least one of the fracture points (10, 12), which cameras are aligned relative to the fracture point (10, 12) such that they photograph the fracture point (10, 12) from two different directions, preferably substantially perpendicular to one another.

24. Testing device according to claim 23, **characterised in that** one camera (24, 24') photographs the edge to determine an offset axial to the connecting rod bore (8) in the radial direction of the connecting rod bore (8) and the other camera (26) photographs the edge to determine an offset radial to the connecting rod bore (8) in the axial direction of the connecting rod bore (8).

25. Testing device according to any of claims 21 to 24, **characterised in that** the camera is a digital camera, where all of the pixels are illuminated at the same time.

26. Testing device according to any of the preceding claims, **characterised by** a light source for illuminating the fracture point (10, 12) or at least one of the fracture points (10,12).

## Revendications

1. Procédé de contrôle de composants séparés par rupture,
dans lequel il est constaté si, au niveau d'au moins un point de rupture, un décalage géométrique existe entre les surfaces de rupture,
**caractérisé en ce que**
au moins au niveau d'un point de rupture, par rapport à des surfaces disposées des deux côtés du point de rupture, un décalage géométrique des surfaces disposées de manière orthogonale par rapport à la fente de rupture est mesurée de manière optique en direction de la normale de la surface.

2. Procédé selon la revendication 1, **caractérisé en ce qu'**une bielle séparée par rupture est contrôlée au niveau de son alésage.

3. Procédé selon la revendication 2, **caractérisé en ce que**, au niveau d'au moins un point de rupture, le décalage géométrique des surfaces disposées des deux côtés du point de rupture est déterminé dans la direction axiale de l'alésage de la bielle.

4. Procédé selon la revendication 2 ou 3, **caractérisé en ce que**, au niveau d'au moins un point de rupture, le décalage géométrique des surfaces disposées des deux côtés du point de rupture est déterminé dans la direction axiale de l'alésage de la bielle.

5. Procédé selon l'une des revendications 2 à 4, **caractérisé en ce qu'**un décalage géométrique des surfaces disposées des deux côtés du point de rupture est déterminé au niveau de deux points de rupture diamétralement opposé par rapport à l'alésage de la bielle.

6. Procédé selon l'une des revendications précédentes, **caractérisé en ce que** le tracé d'une arête formée par les surfaces disposées des deux côtés du point de rupture est détecté de manière optique.

7. Procédé selon la revendication 6, **caractérisé en ce que**, pour la détection du tracé de l'arête, l'arête est photographiée.

8. Procédé selon la revendication 7, **caractérisé en ce que** l'arête est photographiée numériquement et le tracé de l'arête est déterminé à l'aide de la photographie numérique.

9. Procédé selon l'une des revendications précédentes, **caractérisé en ce qu'**à chaque point de rupture correspond au moins une caméra.

10. Procédé selon l'une des revendications 7 à 9, **caractérisé en ce qu'**à au moins un point de rupture correspondent deux caméras, qui photographient le point de rupture dans deux directions différentes, de préférence perpendiculaires entre elles.

11. Procédé selon la revendication 10, **caractérisé en ce que** l'arête est photographiée pour la détermination d'un décalage axiale par rapport à l'alésage de la bielle, avec une caméra dans la direction radiale de l'alésage de la bielle et l'arête est photographiée pour la détermination d'un décalage radiale par rapport à l'alésage de la bielle avec l'autre caméra dans la direction axiale de l'alésage de la bielle.

12. Procédé selon l'une des revendications 8 à 11, **caractérisé en ce qu'**une caméra numérique est utilisée, dans laquelle tous les pixels sont éclairés simultanément.

13. Procédé selon l'une des revendications précédentes, **caractérisé en ce que** le point de rupture ou au moins un des points de rupture est éclairé au moyen d'une source de lumière.

14. Dispositif de contrôle pour le contrôle de composants séparés par rupture, avec des moyens de contrôle, qui constatent si, au niveau d'au moins un point de rupture, un décalage géométrique existe entre les surfaces de rupture,
**caractérisé en ce que**
les moyens de contrôle comprennent des moyens de mesure optiques pour la mesure d'au moins un point de mesure (10) par rapport à des surfaces (14, 16 ou 18, 20) disposées des deux côtés du point de rupture en ce qui concerne un décalage géométrique des surfaces (14, 16 ou 18, 20) disposées de manière orthogonale par rapport à la fente de rupture, en direction de la normale de la surface.

15. Dispositif de contrôle selon la revendication 14, **caractérisé en ce que** le composant séparé par rupture est une bielle (2) séparée par rupture au niveau de son alésage de bielle (8).

16. Dispositif de contrôle selon la revendication 15, **caractérisé en ce que** les moyens de mesure déterminent, au niveau d'au moins un point de rupture (10), le décalage géométrique des surfaces (14, 16) disposées des deux côtés du point de rupture (10) dans la direction axiale de l'alésage de la bielle (8).

17. Dispositif de contrôle selon la revendication 15 ou 16, **caractérisé en ce que** les moyens de mesure déterminent au niveau d'au moins un point de rupture (10) le décalage géométrique des surfaces (18, 20) disposées des deux côtés du point de rupture dans la direction radiale de l'alésage de la bielle (8).

18. Dispositif de contrôle selon l'une des revendications 15 à 17, **caractérisé en ce que** les moyens de mesure déterminent un décalage géométrique des surfaces (14, 16 ou 18, 20) disposées des deux côtés du point de rupture au niveau de deux points de rupture (10, 12) diamétralement opposés par rapport à l'alésage de la bielle (8).

19. Dispositif de contrôle selon l'une des revendications 14 à 18, **caractérisé en ce que** les moyens de mesure sont conçus pour la détection du tracé d'une arête formée par les surfaces (14, 16 ou 18, 20) disposées des deux côtés du point de rupture (10).

20. Dispositif de contrôle selon la revendication 19, **caractérisé par** au moins une caméra pour la détection du tracé de l'arête.

21. Dispositif de contrôle selon la revendication 20, **caractérisé en ce que** la caméra est une caméra numérique (24, 24, 26, 26').

22. Dispositif de contrôle selon la revendication 20 ou 21, **caractérisé en ce qu'**à chaque point de rupture (10, 12) correspond au moins une caméra (24, 26 ; 24', 26').

23. Dispositif de contrôle selon la revendication 22, **caractérisé en ce qu'**à au moins un des points de rupture (10, 12) correspondent deux caméras (24, 26 ; 24', 26') qui sont orientées par rapport au point de rupture (10, 12) de façon à ce qu'elles photographient le point de rupture (10, 12) dans deux directions différentes, de préférence perpendiculairement entre elles.

24. Dispositif de contrôle selon la revendication 23, **caractérisé en ce qu'**une caméra (24, 24') photographie l'arête pour la détermination d'un décalage axial par rapport à l'alésage de la bielle (8) dans la direction radiale de l'alésage de la bielle (8) et l'autre caméra (26) photographie l'arête pour la détermination d'un décalage radial par rapport à l'alésage de la bielle (8) dans la direction axiale de l'alésage de la bielle (8).

25. Dispositif selon l'une des revendications 21 à 24, **caractérisé en ce que** la caméra est une caméra numérique dans laquelle tous les pixels sont éclairés simultanément.

26. Dispositif selon l'une des revendications précédentes, **caractérisé par** une source de lumière pour l'éclairage du point de rupture (10, 12) ou d'au moins un des points de rupture (10, 12).
